# FASCICULE DE BREVET EUROPEEN

(11) **EP 0 651 166 B1**
(45) Date de publication et mention de la délivrance du brevet: **20.08.1997**
(21) Numéro de dépôt: 94420294.4
(22) Date de dépôt: 26.10.1994
(51) Int. Cl.: F16C 9/04, B22F 5/00

(54) **Procédé de fabrication de pieces frittées conjuguées**
Verfahren zur Herstellung von miteinander verbindbare gesinterte Teile
Process for preparing connectable sintered parts

(30) Priorité: 29.10.1993 FR 9313217
(43) Date de publication de la demande: 03.05.1995
(73) Titulaire: SINTERTECH, F-92400 Courbevoie (FR)
(72) Inventeur: Ackermann, Luc, F-38320 Herbeys (FR); Gueydan, Henri, F-38430 Moirans (FR)
(74) Mandataire: Mougeot, Jean-Claude

(56) Documents cités:
- EP-A- 0 342 800
- DE-C- 3 806 236
- US-A- 5 051 232

## Description

L'invention concerne une méthode de fabrication de parties frittées conjuguées, obtenues à partir de la rupture d'une préforme unitaire.

On connait par le brevet DE-C-3 806 236 une méthode de fabrication de parties frittées forgées, obtenues par cassure après frittage d'une préforme dans laquelle est formée avant le frittage une rainure superficielle située dans un plan en vue de la rupture ultérieure avec une couche de protection. Cette rainure est fermée pendant une opération de forgeage. Cependant, selon cette technique, les opérations de séparation et d'usinage sont pratiquées sur la pièce finie, donc de dureté élevée, ce qui implique à la fois des moyens puissants et des frais élevés. D'autre part, la géométrie de l'entaille initiatrice de rupture étant modifiée par l'opération de forgeage, la surface de rupture obtenue est généralement non plane. Enfin, pour réaliser cette rupture pratiquement sans déformation plastique, le matériau doit posséder une faible ténacité.

Le procédé selon l'invention pallie ces trois inconvénients.

Selon l'invention le procédé consiste à :
a) presser une préforme à partir de poudres métalliques en imprimant dans celle-ci une rainure superficielle située dans un plan en vue de la rupture ultérieure,
b) préfritter cette préforme en vue de sa consolidation mécaniquement, celle-ci restant cependant fragile,
c) densifier éventuellement cette préforme par recompression,
d) usiner éventuellement dans cette préforme, en particulier par perçage et/ou taraudage, les logements des organes de liaison mécanique des parties finales,
e) rompre à la température ambiante cette préforme préfrittée en au moins 2 parties,
f) pratiquer le frittage final sur ces parties,
g) refroidir ces parties.

Ces parties conjuguées sont ensuite soit assemblées mécaniquement, soit simplement juxtaposées.
Les conditions de préfrittage utilisées sont telles que l'allongement à rupture en traction d'une éprouvette conforme à la norme NF-A-95-322 mais comportant en son milieu une entaille superficielle, perpendiculaire à sa longueur, de 1 mm de profondeur et ayant un rayon de courbure à fond d'entaille inférieur à 0,5 mm mesuré sur toute la longueur de l'éprouvette, reste inférieure à 1%.

La rupture de la préforme est effectuée soit par traction, soit par flexion. Elle est obtenue avec des surfaces de rupture pratiquement planes.

Le fond de la rainure ou empreinte de la préforme, le plus souvent rectiligne, a de préférence en section droite, un rayon de courbure < 0.5 mm et de préférence < 0.2 mm. Celle-ci est obtenue lors de la compression de la poudre avec un outillage adapté.

L'invention sera mieux comprise à l'aide de l'exemple suivant relatif à la fabrication d'une bielle et d'un chapeau de bielle associé.

### Exemple 1

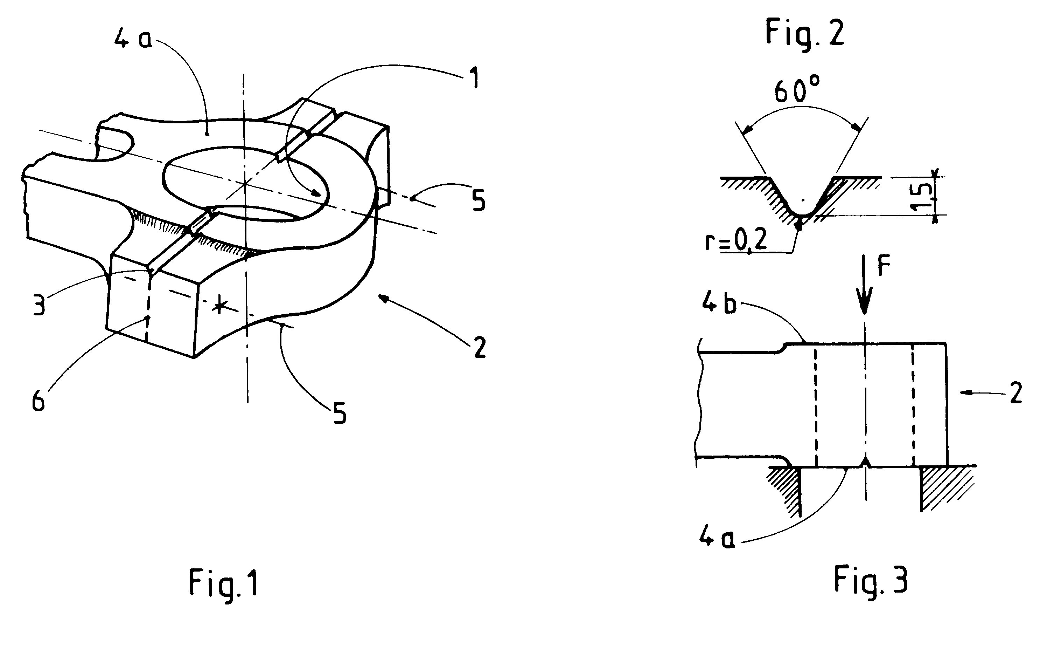

Un mélange de poudres métalliques de composition pondérale 0.7% C; 4% Ni; 1,7% Cu; 0.8% Mo, reste Fe et impuretés habituelles a été comprimé sous 700 MPa en forme de bielles dont le pied de l'une d'elles est représenté schématiquement à la fig. 1. Dans le plan axial de l'alésage (1) du pied de bielle (2) a été imprimée, au cours de la compression sur la face (4a), une rainure en V (3) dont la géométrie est reportée à la fig.2. Elle a ensuite été préfrittée à 850°C pendant 20 min dans une atmosphère contenant en vol. 80% d'azote et 20% d'hydrogène. Cette opération permet l'élimination du lubrifiant de compression sans obtenir une densification totale du matériau.

Elles sont ensuite densifiées par compression pour obtenir une densité ≥ 7,4.
Dans cet état, la structure présente peu de ponts de frittage; elle est principalement ferritique avec quelques ilôts de perlite.

La résistance à la traction sur éprouvettes entaillées (entaille représentée à la fig.2) est de l'ordre de 150 MPa et l'allongement à rupture est typiquement inférieur à 1%.
Après usinage des logements de vis et taraudages correspondants suivant les axes (5), les bielles préfrittées sont cassées en flexion suivant le plan (6) en appliquant à la presse hydraulique un effort suivant la flèche (F), reportée sur la fig. 3.

Les 2 parties obtenues sont alors frittées dans les conditions habituelles (1120°C/30 min. avec la même atmosphère que le préfrittage). Ce frittage final confère aux pièces leurs caractéristiques de résistance mécanique et de ténacité adaptées à leur utilisation.

L'invention offre, par rapport à l'art antérieur, les avantages suivants :
. l'usinage des logements des organes de liaisons, se fait aisément sur un métal peu résistant et peu tenace (en tenant compte bien sûr des variations dimensionnelles connues dues au frittage final);
. il est curieux de constater que même après frittage, les surfaces cassées restent parfaitement jointives, ce qui évite notamment les phénomènes de matage mutuel et/ou de fretting-corrosion ;
. une seule rainure initiale est nécessaire pour obtenir une surface de rupture pratiquement plane ;
. on obtient un produit qui, après frittage, peut être ductile et résilient.

L'invention est en particulier applicable à la fabrication des bielles et chapeaux de bielles, des pièces annulaires à contre-dépouille ou non ou des écrous (rompues dans le plan axial).

## Revendications

1. Procédé de fabrication de parties métalliques frittées conjuguées, consistant à :
a) presser une préforme à partir de poudres métalliques, en imprimant dans celle-ci une rainure superficielle (3) située dans un plan en vue de la rupture ultérieure,
b) préfritter cette préforme en vue de sa consolidation mécanique, celle-ci restant cependant fragile,
c) densifier éventuellement cette préforme par recompression.
d) usiner éventuellement dans cette préforme les logements des organes de liaison mécanique des parties finales,
e) rompre à la temperature ambiante cette préforme préfrittée en au moins 2 parties,
f) pratiquer le frittage final sur ces parties,
g) refroidir ces parties.

2. Procédé selon la revendication 1 dans lequel les parties obtenues en l'étape g) sont assemblées mécaniquement.

3. Procédé selon l'une des revendications 1 ou 2 caractérisé en ce que la rupture de l'étape e) est obtenue par flexion.

4. Procédé selon l'une des revendications 1 ou 2 caractérisé en ce que la rupture de l'étape e) est obtenue par traction.

5. Procédé selon l'une des revendications 1 à 4 caractérisé en ce que le rayon de courbure (r) du fond de la rainure (3) est inférieur à 0,5 mm, et de préférence 0,2 mm.

6. Procédé selon l'une des revendications 4 ou 5 caractérisé en ce que l'allongement de rupture en traction de la préforme préfrittée est inférieure à 1 %.

7. Procédé selon l'une des revendications 1 à 6 caractérisé en ce que la rainure est rectiligne.

8. Procédé selon l'une des revendications 1 à 7 caractérisé en ce que les opérations d'usinage consistent essentiellement en perçages et taraudages.

9. Procédé selon l'une des revendications 2 à 7 appliqué à la fabrication d'une bielle et chapeau de bielle.

## Patentansprüche

1. Verfahren zur Herstellung von gesinterten zusammengehörigen Metallteilen, mit folgenden Schritten:
a) Ausüben von Druck auf einen Vorformling aus Metallpulvern, wobei in den Vorformling eine oberflächliche Kerbe (3) eingeprägt wird, die sich in der Ebene des späteren Bruches befindet,
b) Vorsintern des Vorformlings, um ihn mechanisch zu verfestigen, wobei dieser spröde bleibt,
c) ggf. Verdichten des Vorformlings durch Nachpressen,
d) ggf. maschinelle Bearbeitung der Anordnungen der mechanischen Verbindungsteile der am Ende vorliegenden Teile an dem Vorformling,
e) Brechen des vorgesinterten Vorformlings in mindestens zwei Teile bei Raumtemperatur,
f) Durchführen des endgültigen Sinterns an den Teilen,
g) Abkühlen der Teile.

2. Verfahren nach Anspruch 1, wobei die in Schritt g) hergestellten Teile mechanisch verbunden werden.

3. Verfahren nach einem der Ansprüche 1 oder 2,
dadurch gekennzeichnet, daß
der Bruch in Schritt e) durch Zug erzielt wird.

4. Verfahren nach einem der Ansprüche 1 oder 2, dadurch
gekennzeichnet, dass
der Bruch in Schritt e) durch Durchbiegung erzielt wird.

5. Verfahren nach einem der Ansprüche 1 bis 4,
dadurch gekennzeichnet, daß
der Krümmungsradius r des Bodens der Einkerbung (3) unter 0,5 mm und vorzugsweise 0,2 mm liegt.

6. Verfahren nach einem der Ansprüche 4 oder 5,
dadurch gekennzeichnet, daß
die Zugbruchdehnung des vorgesinterten Vorformlings unter 1 % liegt.

7. Verfahren nach einem der Ansprüche 1 bis 6,
dadurch gekennzeichnet, daß
die Einkerbung gerade ist.

8. Verfahren nach einem der Ansprüche 1 bis 7,
dadurch gekennzeichnet, daß
die Arbeitsgänge der maschinellen Bearbeitung im wesentlichen aus Bohren und Gewindeschneiden bestehen.

9. Verfahren nach einem der Ansprüche 2 bis 7, das zur Herstellung von Pleuelstangen und Lagerdeckeln angewandt wird.

## Claims

1. Process for producing connected sintered metallic parts involving:
a) pressing a preform from powdered metals while imprinting in it a superficial groove (3) located in a plane for the purpose of subsequent breakage,
b) presintering this preform in order to consolidate it mechanically, the preform however remaining brittle,
c) optionally compacting this preform by recompression,
d) optionally machining recesses in this preform for the members for the mechanical connection of the final parts,
e) breaking this presintered preform at ambient temperature into at least two parts,
f) carrying out final sintering on these parts,
g) cooling these parts.

2. Process according to claim 1, in which the parts obtained in stage g) are mechanically connected.

3. Process according to one of claims 1 or 2, characterised in that the breakage in stage e) is obtained by bending.

4. Process according to one of claims 1 or 2, characterised in that the breakage in stage e) is obtained by tensile stress.

5. Process according to one of claims 1 to 4, characterised in that the radius of curvature (r) of the groove bottom (3) is smaller than 0.5 mm and preferably 0.2 mm.

6. Process according to one of claims 4 or 5, characterised in that the elongation at break under tensile stress of the presintered preform b) is lower than 1%.

7. Process according to one of claims 1 to 6, characterised in that the groove is rectilinear.

8. Process according to one of claims 1 to 7, characterised in that the machining operations essentially involve perforation and tapping.

9. Process according to one of claims 2 to 7 applied to the production of a connecting rod and connecting rod cover.
